# EUROPEAN PATENT SPECIFICATION

(11) **EP 3 003 122 B1**
(45) Date of publication and mention of the grant of the patent: **16.08.2023**
(21) Application number: 14733471.8
(22) Date of filing: 30.05.2014
(51) Int. Cl.: A61B 3/028, G06F 3/01, G02B 27/01

(54) **SYSTEMS AND METHODS FOR CUSTOMIZING OPTICAL REPRESENTATION OF VIEWS PROVIDED BY A HEAD MOUNTED DISPLAY BASED ON OPTICAL PRESCRIPTION OF A USER**
SYSTEME UND VERFAHREN ZUR ANPASSUNG DER OPTISCHEN DARSTELLUNG VON ANSICHTEN DURCH EINE KOPFMONTIERTE ANZEIGE AUF BASIS DER OPTISCHEN BESTIMMUNG EINES BENUTZERS
SYSTÈMES ET PROCÉDÉS PERMETTANT DE PERSONNALISER LA REPRÉSENTATION OPTIQUE DE VUES GÉNÉRÉES PAR UN VISIOCASQUE (HMD) SUR LA BASE D'UNE PRESCRIPTION OPTIQUE D'UN UTILISATEUR

(30) Priority: 08.06.2013 US 201361832845 P; 25.03.2014 US 201414225408
(43) Date of publication of application: 13.04.2016
(73) Proprietor: Sony Interactive Entertainment Inc., Tokyo 108-8270 (JP)
(72) Inventor: STAFFORD, Jeffrey, Roger, San Mateo, CA 94404 (US)
(74) Representative: D Young & Co LLP
(86) International application number: PCT/US2014/040411
(87) International publication number: WO 2014/197338

(56) References cited:
- US-A1- 2010 079 356
- US-A1- 2010 091 027
- US-A1- 2011 157 180
- US-A1- 2011 169 928
- US-A1- 2012 254 779
- US-A1- 2013 127 821

## Description

### BACKGROUND

### 1. FIELD OF THE INVENTION

The present invention relates to methods and systems for customizing representation of views in a head mounted display.

### 2. Description of the Related Art

The video game industry has seen many changes over the years. As computing power has expanded, developers of video games have likewise created game software that takes advantage of these increases in computing power. To this end, video game developers have been coding games that incorporate sophisticated operations and mathematics to produce a very realistic game experience.

A number of gaming platforms have been developed and sold in the form of game consoles. A typical game console is designed to connect to a monitor (usually a television) and enable user interaction through handheld controllers. The game console is designed with specialized processing hardware, including a central processing unit (CPU), a graphics synthesizer for processing intensive graphics operations, a vector unit for performing geometry transformations, and other glue hardware, software, and firmware. The game console is further designed with an optical disc tray for receiving game compact discs for local play through the game console. The game console is also designed for online gaming, where a user can interactively play against or with other users over the Internet. As game complexity continues to intrigue players, game and hardware manufacturers have continued to innovate to enable additional interactivity and computer programs.

A growing trend in the computer gaming industry is to develop games and game controllers that increase the interaction between user and the gaming system. The game controllers include features that enable richer interactive experience by allowing a gaming system to track the player's varied movements, and use these movements as inputs for a game executed on the gaming system.

It is in this context that embodiments of the invention arise.

Previously proposed arrangements are disclosed in US2011/157180 A1, US 2010/091027 A1, US2010/079356 A1, US2012/254779 A1, US2011/169928 A1 and US2013/127821 A1.

### SUMMARY

The invention is defined by the appended claims.

Other aspects of the invention will become apparent from the following detailed description, taken in conjunction with the accompanying drawings, illustrating by way of example the principles of embodiments of the invention.

### BRIEF DESCRIPTION OF THE DRAWINGS

Various embodiments of the present invention may best be understood by reference to the following description taken in conjunction with the accompanying drawings in which:
Figure 1 illustrates a system architecture configuration of a game environment, in accordance with some embodiments of the present invention.
Figures 2A-2D illustrate components of head mounted display used in the interaction with a game program, in accordance with embodiments of the invention.
Figures 3A-3E illustrate implementation of receiving clarity level for images rendered on a head mounted display, in some embodiments of the invention. Figue 3F is an example only.
Figure 4 illustrates a method operation for operating a screen of a head mounted display, in accordance with an embodiment of the invention.
Figure 5 illustrates method operations for operating a screen of a head mounted display, in accordance with an alternate embodiment of the invention.
Figure 6 illustrates overall system architecture of a game module, in one embodiment of the invention.
Figure 7 illustrates a block diagram of a game system, in accordance with an embodiment of the invention.

### DETAILED DESCRIPTION

Systems and methods for operating a screen of a head mounted display (HMD) are described. A program that renders images on a screen of the HMD, is executed. The images are rendered using an optical setting that defines a size and a distance at which the image is being rendered. Clarity level feedback is sought and received for the rendered images. Based on the clarity level feedback, the optical setting of the screen is automatically adjusted. The adjusted optical settings provide a clarity level sought by the users. In some embodiments, the optical setting adjustments compensate for any optical characteristic deficiencies in a user's vision. The embodiments provide a way of adjusting resolution of the images rendered on the screen so that any images rendered are clearly visible to the user when the user uses the HMD for any interactive games or programs.

The optical settings of a user are stored in a user profile so that when the user uses the HMD next time, the screen is automatically adjusted to the user's preferred settings without needing any manual adjustments from the user. The user's preferred settings for the screen are stored in a user profile and retrieved every time the user uses the HMD. A biometric identity may be used to identify the user and for retrieving the preferred settings for the screen from the user profile of the user. When more than one user uses the HMD, the user profile of each user may be used to provide the preferred settings of the respective users. The embodiments also provide ways for a user to enjoy an interactive game or interactive program without having to wear corrective/prescription glasses or contact lens.

It should be noted that well known process operations have not been described in detail in order not to unnecessarily obscure various embodiments described in the present disclosure.

In one embodiment, the system includes a computer, a hand-held controller (HHC), and a head mounted display (HMD). In various embodiments, the computer may be a general purpose computer, a special purpose computer, a gaming console, a mobile phone, a tablet device, or other such device which executes one or more portions of an interactive program that is rendered on a display. The interactive program may be a multi-user game program that is played by multiple users or a single user game program that is played by a user with a computer. In these embodiments, any remaining portions of the interactive program are executed on a game cloud system, e.g., one or more virtual machines (VMs). In some embodiments, all portions of the interactive program are executed on the game cloud system.

The HMD is a display device, worn on a head of a user or as part of a helmet, that has a small display optic in front of one or each eye of the user. In some embodiments, the HMD is capable of receiving and rendering audio and video output from the computer. A user operates a hand held controller (HHC) and/or the HMD to generate one or more inputs that are provided to the interactive program. In various embodiments, the HHC and/or the HMD communicates wirelessly with the computer, as this provides for greater freedom of movement of the HHC and/or the HMD than a wired connection. The HHC may include any of various features for providing input to the interactive program, such as a controller with buttons, a controller with inertial sensors, a controller with trackable LED lights, a controller with touch screen, a joystick, directional pad, trigger, touchpad, touchscreen, or other types of input mechanisms that detect hand gestures, voice input, etc.

Furthermore, the HHC may be a motion controller that enables the user to interface with and provide input to the interactive program by moving the controller. Along similar lines, the HMD may include a user input circuit that enables the user to interface with and provide input to the interactive program by moving the HMD. Various technologies may be employed to detect the position and movement of the motion controller and/or the HMD. For example, the motion controller and/or the user input circuit of the HMD may include various types of inertial sensor circuits, such as accelerometers, gyroscopes, and magnetometers. In some embodiments, the motion controller may include global position systems (GPS), compass, etc. In some embodiments, an accelerometer is a 6-axis low latency accelerometer. In some embodiments, the motion controller and/or the user input circuit can include one or more fixed reference objects (otherwise termed "marker elements"), e.g., light emitting diodes (LEDs), colored points, light reflectors, etc. The images of the fixed reference objects are captured by one or more digital cameras of the system. In some embodiments, a digital camera includes a video camera that further includes a single Charge Coupled Device (CCD), an LED indicator, and hardware-based real-time data compression and encoding apparatus so that compressed video data may be transmitted in an appropriate format, such as an intra-image based motion picture expert group (MPEG) standard format. The position and movement of the motion controller and/or the HMD can then be determined through analysis of the images captured by the one or more digital cameras.

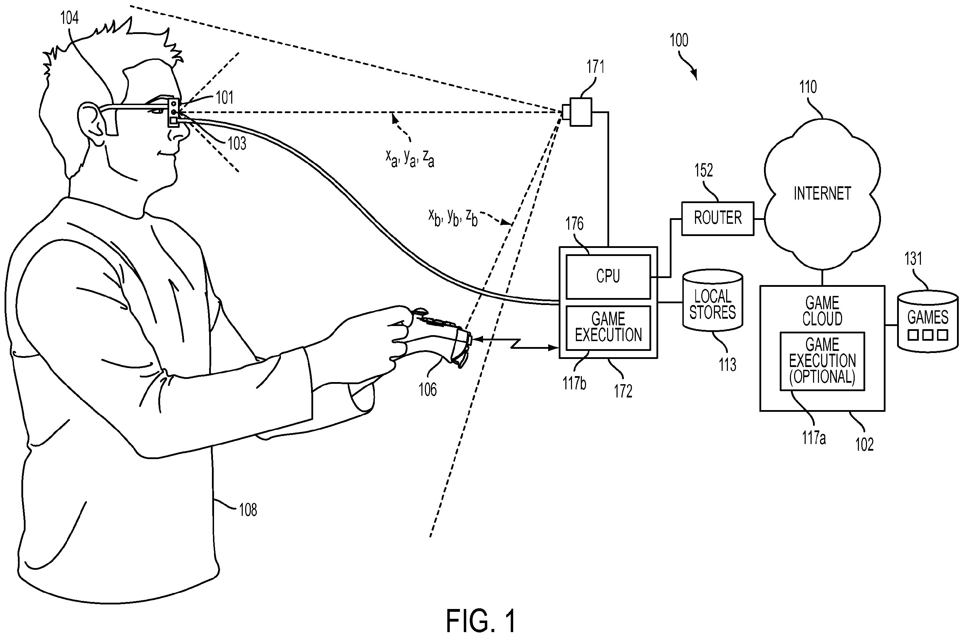

Figure 1 is an embodiment of an exemplary configuration of a system 100. In one embodiment, the system includes a program cloud, such as a game cloud 102, an HMD 104 and an HHC 106 communicating over the internet 110. In one embodiment, the HMD 104 includes a router 152 to communicate with the internet 110. In some embodiments, the game cloud 102 is referred to herein as a game cloud system. The HMD 104 is placed by a user 108 in front of his/her eyes in a similar manner in which the user 108 would put on a helmet. The HHC 106 is held by the user 108 in his/her hands.

In various embodiments, instead of the HHC 106, hands of the user 108 are used to provide gestures, e.g., hand gestures, finger gestures, etc., to the HMD 104. In some embodiments, the HHC may be an interactive glove with sensors to provide tactile feedback when worn by a user in response to interactive gestures/actions. The interactive glove may include marker elements, such as LEDs, light reflectors, etc., to allow detection of various movements. The HHC is not restricted to interactive glove but may include other wearable objects such as clothes, hats, shoes, etc., with built-in sensors for providing tactile feedback and marker elements to allow detection of various movements. A digital camera 101 of the HMD 104 captures images of the gestures and a processor within the HMD 104 analyzes the gestures to determine whether a game displayed within the HMD 104 is affected. In one embodiment, the camera 101 is an external digital camera located on a face plate of the HMD 104 facing forward. In some embodiments, more than one external digital cameras may be provided on the face plate of the HMD 104 to capture different angles of the real-world images. In some embodiments, the camera may be stereo camera, an IR camera, a single-lens camera, etc. As used herein, the processor may be a microprocessor, a programmable logic device, an application specific integrated circuit, or a combination thereof.

The system 100 includes a network, such as Internet, 110, which may be a local area network (LAN), a wide area network (WAN), or a combination thereof. Examples of the network 110 include the Internet, an Intranet, or a combination thereof. In some embodiments, the network 110 uses a transmission control protocol (TCP)/Internet Protocol (IP) to communicate media data via the network 110 between the game cloud 102 and the HMD 104 or the HHC 106. In various embodiments, the network uses a combination of Ethernet and TCP/IP protocol to communicate media data via the network 110 between the game cloud 102 and the HMD 104 or the HHC 106.

The game or program cloud 102 includes a coder/decoder for coding/decoding media data using lossy compression or lossless compression, etc., and a stream buffer for storing a stream of media data generated upon execution of a program 117. In some embodiments, the program 117 is a game program. In other embodiments, the program 117 is an interactive application program. The media data includes virtual environment data, virtual game object data, a combination thereof, etc. The virtual environment data is used to generate a virtual environment of a game or an interactive program and the virtual game object data is used to generate one or more virtual objects or virtual game objects, e.g., virtual game characters, virtual game objects for rendering within a game scene of the virtual game, virtual points, virtual prizes, game interface, etc.

The HMD 104 is used to access an operating system (OS) that is executed by the processor of the HMD 104. Similarly, the HHC 106 may be used to access an OS that is executed by the processor of the HHC 106. In some embodiments, the OS allows the HMD 104 to directly access the network 110 through the router 152. The router 152 uses the network 110 to interact with the game cloud to exchange game or program data. In these embodiments, the communication between the network 110 and the HMD 104 follows a wireless communication protocol. Along similar lines, the HHC 106 gains access to the network 110 by selecting the network using network access application and the communication between the HHC 106 and the network follows a wireless communication protocol. Once the network 110 is accessed, the OS allows the HMD 104 to access the game program 117 in a manner similar to the selection of the network, such as selecting a program/game access application and request access to the game program/program 117. In some embodiments, the display screen of the HMD 104 is a high performance screen to reduce blur when the HMD 104 is moved rapidly. The user 108 performs one or more head and/or eye motions, e.g., head tilting, winking, moving eyes from side to side, gazing, staring, etc., and each head or eye motion triggers the user input circuit to generate an input, which may be used to provide input to the game program. In these embodiments, the game program 117 executes on the game cloud 102 and the communication between the game program 117 and the HMD 104 is through the router 152 and the network 110.

As illustrated in Figure 1, the system 100 includes a computer 172 in communication connection with the game cloud 102 through the router 152 and the internet 110 to obtain portions of the program and program related data. The computer is also communicatively connected to the HMD 104 and the HHC 106 to obtain input data.

In addition to the HMD and the HHC accessing the network 110, in some embodiments, a processor of the computer 172 executes a wireless access application stored within a memory device of the computer 172 to access the network 110. Access to the network by the computer 172 is similar to the HMD's access to the network using network access application. In some embodiments, the wireless access application is executed in response to input data received from a user via the HMD 104 or the HHC 106. The input data may include head motions and/or hand motions. When the processor of the computer 172 receives the input data generated by the HMD or the HHC, the wireless access application generates a list of wireless networks from which a network is selected to access the network 110.

The computer 172 includes a network interface controller (NIC) (not shown) that requests a portion of the program 117 from the game cloud 102 and in response, the portion 117-b of the game program 117 encoded by the codec is streamed via the network 110 to the NIC of the computer 172. Although embodiments are described with reference to selection, downloading and interacting with a game program, it should be understood that the embodiments may also be used to select, download and interact with any interactive application program. As a result, any references to a game program should be understood to be referencing any interactive application program including a game program. In some embodiments, the game cloud includes a games database 131 from which the game program 117 is retrieved and downloaded to the computer 172. In some embodiments, a portion 117-a of the game program 117 is downloaded from the games database 131 on to the game server 102 and the remaining portion 117-b of the game program 117 is downloaded to the computer 172. In some embodiments, the portion 117-b that is downloaded to the computer 172 is the entire game. The processor 176 of the computer 172 executes the portion 117-b of the game program 117 to generate media data, additional media data and next media data (collectively termed 'media data') which is sent from a communications circuit (not shown), a network interface controller (not shown), etc., of the computer 172, to the HMD 104 for display on the display screen of the HMD 104.

The additional media data and next media data may be provided in response to input data, including head motions/other user input, hand motions, etc., received from the HMD 104. In addition to the head motions and/or hand motions the input data, in one embodiment, may also include real-world environment data that is captured by an external camera 101 disposed on the outside face of the HMD 104 and transmitted by the communications circuit of the HMD 104. The additional media data provides virtual environment related data for rendering the virtual game scenes on the HMD and the next media data provides changes to virtual game objects and/or virtual environment displayed within the virtual game scenes. A communications circuit of the HMD 104 receives the media data as a media stream from the computer 172 and sends the media data to the microcontroller of the HMD 104 for interpretation and display on the display screen of the HMD 104. When the game objects, e.g., real game objects, virtual game objects, etc., and/or virtual environment changes, a game state of the game displayed by execution of the game program 117, also changes.

In some embodiments, the game state is sent by the NIC of the computer 172 via the router 152 and the network 110 to the game cloud 102 to inform one or more servers of the game cloud 102 of the game state so as to synchronize the game state with the game state on the computer 172. In these embodiments, most of the game execution occurs on the computer 172.

In some embodiments, a portion 117-a of the game program 117 is executed on the game cloud 102 while the game program 117 is being downloaded on to the computer 172. Accordingly, media data associated with the execution of the portion 117-a of the game program 117 on the game cloud 102, are sent from the codec via the network 110 and the router 152 to the HMD 104 for rendering on the HMD until the portion 117-b of the game program 117 is downloaded to the computer 172 from the game cloud 102. In one embodiment, the portion 117-b of the game program 117 is downloaded and stored in the local storage 113 of the computer 172 and executed by the processor 176. Once the portion 117-b is downloaded and the processor 176 of the computer 172 starts executing the game portion 117-b, the media data will be transmitted from the computer 172 to the HMD 104 for the portion 117-b of the game program 117. In some embodiments, all the media data for the game program are transmitted directly from the computer 172 to the HMD 104 for rendering. The computer 172 may also periodically transmit the media data to the game cloud 102 to synchronize the game state of the game program on the game cloud 102 with the game state on the computer 172.

In a number of embodiments, a portion of input data based on the head motions and/or hand motions are captured by the observation camera 171 that is connected to the computer 172. in some embodiments, the connection between the observation camera 171 and the computer 172 may be a wired connection. In other embodiments, the connection between the observation camera 171 and the computer 172 may be a wireless connection. In some embodiments, the observation camera 171 is any one or combination of stereo camera, IR camera or mono-camera. In some embodiments the observation camera 171 is one of a video camera or a still-motion camera. The images captured by the observation camera 171 may be used to determine the location and motion of the HMD and the HHC. For example, the images of the observation camera 171 may be used to identify coordinates of position A for the HMD (Xₐ, Yₐ, Zₐ) and coordinates of position B for the HHC (X_{b}, Y_{b}, Z_{b}). In addition to the coordinates of the coordinate plane, the images of the observation camera may be used to determine the pitch, the yaw and the roll to generate the six-axis data for the HMD and HHC. In some embodiments, the head and/or hand motions captured by the observation camera 171 is transmitted to the microcontroller of the HMD 104 where the six-axis data from the HMD 104 and/or HHC 106 are computed/interpreted to generate the input data. The input data from the HMD 104 is transmitted to the computer 172 to influence the outcome of the game program. In some embodiments, the head and/or hand motions captured by the observation camera 171 are directly transmitted to the processor 176 where it is interpreted to generate the six-axis data. The observation camera 171 thus observes the motions (head and/or hand) of the user and this information is used in providing feedback to the game program to influence the game state changes. In this embodiment, any other input data related to the game program 117 are transmitted by the HMD 104 to the processor and the processor 176 interprets the other input data with the six-axis data to determine if the game state of the game needs to be altered. Based on the interpretation, the game state of the game is changed. In some embodiments, the input data from the HMD 104 includes real-world environment data captured by the external camera 101 and sent from the communications circuit of the HMD 104 to the communications circuit of the computer 172. The real-world environment data may be used to influence the virtual game scenes rendered at certain portions of the screen of the HMD 104.

In some embodiments, the HMD 104 is communicatively connected to the computer 172 using a wired connection. In such embodiments, the HMD is configured to detect a break in the wired connection so as to pause the virtual game scenes rendered on the screen of the HMD 104. The signal of the break-in connection is relayed to the computer 172 to cause the computer 172 to pause the execution of the game program and to store the game state and game scenes for the session of the game. In such instances, power from a battery may be used to provide the power for communicating with the computer 172 to provide the status of the connection. The execution of the game program may resume as soon as the computer 172 gets a signal from the HMD 104 that the communication connection has been established. In some embodiments, upon resumption of the connection between the HMD and the computer 172, the computer 172 may start streaming the game scenes and/or game related data from the point of disruption. In another embodiment, the computer 172 may start streaming the game scenes and/or game related data from a point before the pause (for example, few hundred frames before the cause) caused by the connection disruption so that the user may get some time to immerse in the game. In this embodiment, the computer 172 may allow the user to re-execute portions of the game to allow the user to slowly immerse into the game. The communication between the HHC and the HMD and the communication between the HHC and the computer 172 may follow a wireless communication protocol.

In some embodiments, the HMD 104 may include one or more internal cameras 103 to detect changes in the user's eyes movement. The internal cameras 103 may also be used to identify/authenticate the user before providing access to the game.

Although detailed description is provided regarding a gaming environment, it is envisioned that the interfacing can also take place during interactive communication with a computer system. The computer system can be a general computer, with a graphical user interface that allows user 108 to present and make gestures in space, that control icons, entry, selection, text, and other commands.

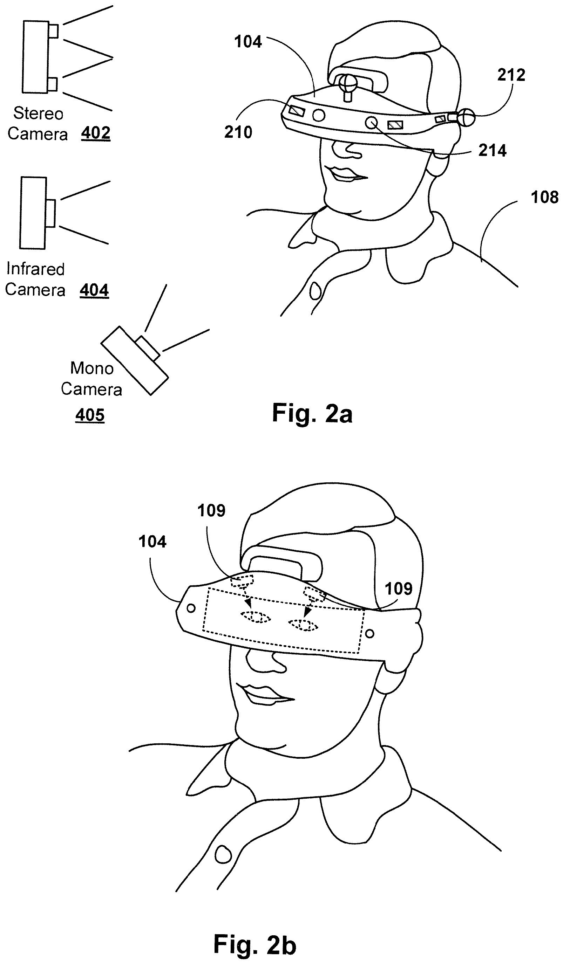

Figures 2A-2D illustrate block diagrams of a head mounted display (HMD) 104 depicting various views and aspects that are used to communicate program related media data to and from the game cloud 102. The HMD 104 is configured to display computer generated image (i.e., virtual image) generated for a game program 117 that is partially or fully executing on the computer 172, and/or that is partially or fully executing on the game cloud by decoding the media data received at the HMD. The HMD is also configured to code the media data generated from the HMD before transmitting to the computer and/or game cloud for updating the executing game program. The HMD is also configured to display real-world environment images captured from the perspective of the user.

Figure 2A is a diagram of an embodiment of a HMD 104 used for generating input data based on the head motions and/or the hand motions and for rendering game scenes and real-world environment scenes. As shown, the HMD 104 is worn by a user 108. The HMD 104 includes one or more marker elements that assist in the visual tracking of the HMD. Similarly, the HHC 106 (not shown) includes one or more marker elements that are similar to the marker elements provided on the HMD. Each marker element may be a light emitting diode 214, an infrared light 210, a color, a reflective material, an object with special features or characteristics that are easily recognized via image analysis, etc. For example, a spherical object 212 may be added to the HMD for easy tracking. In addition, the spherical object 212 may also be illuminated with LED light, infrared light, or any other type of illumination. In addition, the HMD 104 may also include special visual markers (not shown), such as reflective areas, areas with a particular color (e.g., blue rectangle, etc.), or markings (e.g., three parallel lines on the surface of the HMD).

Additionally, in some embodiments, the HMD also includes additional marker elements in the side and/or back of the HMD (i.e., the part of the HMD touching the back of the head) to further visually track the location of the HMD by detecting the lights or visual markers.

The visual tracking of the HMD may be enabled with different types of cameras. In some embodiments, the cameras are observation cameras 171 (of Figure 1 ). In one embodiment, the HMD is tracked with a stereo camera 402, which is a camera that includes two or more lenses with separate image sensor for each lens. The separate image sensor enables the stereo camera to capture three-dimensional images of an object that provide an illusion of depth. The stereo cameras optics are designed to be set to optical infinity (for example, about 9 metres) to provide the stereoscopic images. Images of the marker elements of the HMD captured by the different lenses are compared using triangulation analysis to determine the location of the HMD in the three-dimensional space (for e.g., the calculation of the depth within the field of play).

In another embodiment, an infrared (IR) camera 404 may be used to analyze infrared light (e.g., infrared lights 210). The infrared light is not visible to the human eye but can be easily detected by the infrared camera. The HMD may include infrared lights that do not detract from the looking appearance of the HMD. In some environments (e.g., low light or bright light), it may be easier to track infrared light than other types of lights for detecting the shape of the HMD, or features in the HMD. The infrared (IR) cameras provide enhanced imaging and thermal imaging of a tracking object, such as the HMD. The IR cameras may also be used to as internal cameras to detect user's gaze direction.

In yet another embodiment, a regular camera 405, also referred to herein as a mono camera because it has only one lens, is used to track the lights or other marker elements in the HMD that are configured for visual tracking. In order to determine the depth of the HMD within the field of play with the regular camera, the size of some of the features on the HMD are analyzed. The smaller the features are, the further away the features are from the camera of the HMD. In addition, the visual tracking may also be combined with other types of tracking, such as inertial motion tracking, dead reckoning, ultrasound communication between the HMD and the computing device, etc.

The digital camera 402 captures an image of the HMD 104. When the head of the user 108 tilts or moves, position and location of the marker elements changes in a coordinate system. The digital camera captures an image of the marker elements and sends the image to the computer 172. An image of the marker elements is an example of input data. Position of the HMD 104 in a three dimensional space (X, Y, Z) can be determined by the processor 176 of the computer 172 based on the positions of the marker elements in the images. Further, inertial motion, e.g., yaw, pitch, and roll, etc., of the HMD 104 is determined by the processor 176 of the computer 172 based on movement of the marker elements captured in the images. In the cases where the computer 172 is not available, the image of the marker elements from the digital camera are sent to the processor of the HMD 104 and the HMD's processor will determine the position of the HMD using the coordinates of the marker elements.

In some embodiments, the digital camera 402 captures an image of the HHC 106. When the hand of the user 108 tilts or moves, position and location of the marker elements on the HHC changes in a co-ordinate system. The digital camera captures an image of the marker elements on the HHC and sends the image to the computer 172 or to the processor of the HMD 104. An image of the marker elements on the HHC is an example of input data. Position of the HHC 106 in a three dimensional space (X, Y, Z) can be determined by the processor 176 of the computer 172 or by the processor of the HMD 104 based on the positions of the marker elements on the HHC in the image. Moreover, inertial motion, e.g., yaw, pitch, and roll, etc., of the HMD 104 is determined by the processor 176 of the computer 172 or the processor of the HMD 104 based on movement of the marker elements of the HHC.

In some embodiments, instead of capturing the image of the HHC 106, the digital camera captures the image of the hand to determine the position of the hand in three dimensional space and the inertial motion of the hand and the HMD 104. In some embodiments, an interactive glove or other wearable object may be used instead of the HHC 106. The glove or other wearable object may include marker elements to track the motion of the different portions of the glove/wearable object and used to interpret the motion of the user's hand or other parts of the user's body as it relates to the recorded motions of the glove/wearable object.

For more information regarding method for following a marked object, reference may be made to U.S. Patent Application Publication No. 2012-0072119, filed on Aug. 15, 2011 and published on March 22, 2012, and U.S. Patent Application Publication No. 2010-0105475, filed on Oct. 27, 2008 and published on April 29, 2010.

As shown, one or more pairs of stereo camera 402, one or more infrared cameras 404 and/or one or more mono camera 405 or combinations thereof may be used to determine the relative position of the HMD and the motion of the HMD provided by user's head motion.

The HMD may also be equipped with one or more internal cameras mounted on the inside to capture images related to the user and feed the images to the communication module to provide user specific and environment specific data to the HMD. The internal camera(s) may be used to identify a user wearing the HMD, which can be used to obtain user profile of the user. Accordingly, the HMD may execute a program that causes the internal cameras to engage retinal scanning technique and/or iris scanning technique to scan the user's retina or irises. The data from the scanning is used to generate at least one biometric identity of the user. The user's biometric identity is used to generate the user's profile. The internal cameras also include a gaze detector algorithm to detect the direction of the user's gaze and to adjust the image data rendered on a screen of the HMD based on the detection. In some embodiments, the internal cameras are IR cameras. The gaze detection technology may also be used to authenticate a user. For example, the user may be asked to follow an object rendered on the screen or track a randomly generated letter, object or pattern (for e.g., a circle, a triangle, a rectangle, etc.) that is rendered on the screen. In some embodiments, verbal or textual commands may be provided for a user to track a letter, an object or pattern on the screen and the user is authenticated by using the gaze detection technology. The authentication of a user may be used to allow access to a user account, to a game, to certain parts or levels of a game, etc. User identification/authentication may be used to implement additional controls, such as parental controls, age appropriate controls, etc., when providing access to user account, to a game, to an application, or to any other content that are selected for rendering at the display screen of the HMD. Figure 2B illustrates a user wearing the HMD 104 with the internal cameras 109 (103 of Figure 1) for detecting the biometric identity of the user and the eye movement of the user.

The internal cameras 109 and the external cameras work hand-in-hand to determine the gaze of the user and to relate the gaze to an object in the line-of-sight of the user's gaze. The game processing module of the HMD includes the software to compute the direction of the user's gaze and correlate it to objects within the field of view of the computed direction.

The HMD includes one or a pair of display screens in front of one or each eye. The display screen(s) are miniature screens that include cathode ray tubes (CRTs), liquid crystal displays (LCDs), liquid crystal on silicon (LCoS) or organic light emitting diodes (OLEDs), to name a few. Alternately or in addition to the aforementioned display screens, the HMD may include display screen(s) that are situated on the side, top, and/or rear of the HMD. In some embodiments, the HMD "display" may also be generated by a scanning projector or other form of optical projection/expansion.

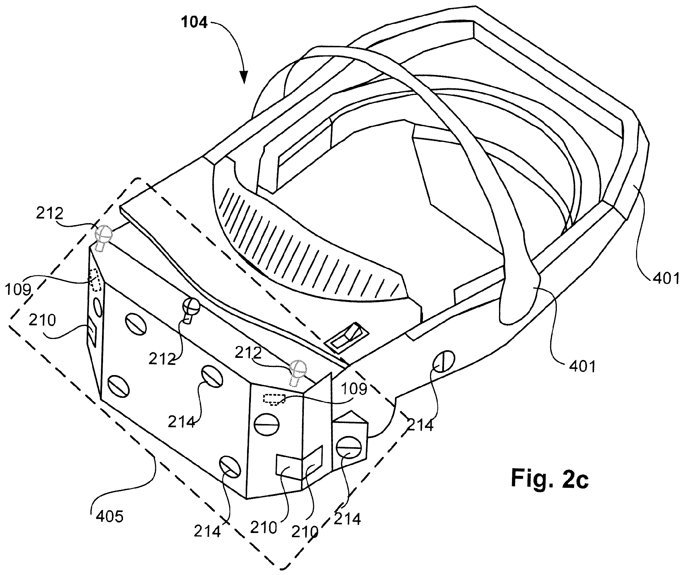

Figure 2C illustrates a block diagram rendition of a simplified HMD used in various embodiments of the invention. The HMD may include one or more anchor straps 401 to allow the HMD to fit securely over a user's head and a front face plate 405. The front face plate 405 includes a screen portion with screen disposed on the inside and one or more internal camera units (109) disposed thereon. In addition to the internal camera units (i.e., inside mounted cameras), one or more external camera units 101 (i.e., outside mounted cameras) may also be disposed on the HMD to capture real-world environment as seen from the user's perspective. The external camera units 101 are in addition to observation camera 171 (of Figure 1) that are used to detect the motion of the HMD and the HHC. The face plate of the HMD includes a plurality of marker elements including one or more light emitting diodes 210, one or more infrared lights 214 and one or more spherical objects 212, a color, a reflective material, objects with special features/characteristics that are easily recognized via image analysis, etc. During game play, image of the marker elements on the HMD are captured by the one or more observation camera(s) and coordinates data from the captured image are used to determine the location, movement and positon of the HMD. The observation camera(s) may be connected to the HMD directly or through a computer 172 and configured to exchange data related to the captured image with the HMD and/or with the computer 172. When transmitted to the HMD, the processor within the HMD processes the data to identify the six-axis data of the HMD and transmits the processed data to the computer 172 and/or to the game cloud 102 through the computer 172 (when present) and router, or through the router and network or directly as input data from the HMD. The input data influences or affects the game state of the game program.

The internal cameras 109 detect and track the user's eye movement and gaze. The internal cameras 109 may be used to determine the user's gaze direction for a period of time (for e.g., when the user who was looking straight looks down for some period of time), detect a gaze pattern over a period of time (for e.g., when a user follows an object, traces a pattern, etc.), and/or detect changes in gaze directions (for e.g., back-and-forth movement of the eyes, rolling of the eyes - which may be a sign of the user experiencing dizziness - especially in a high intensity game, etc.). The HMD's internal cameras communicate with the HMD's external cameras and with the observation cameras to determine appropriate game-related data for rendering on the screen of the HMD. This communication will enable rendering of the user/environment related data alongside or in place of the game-related data on the screen of the HMD, in response to certain triggered events.

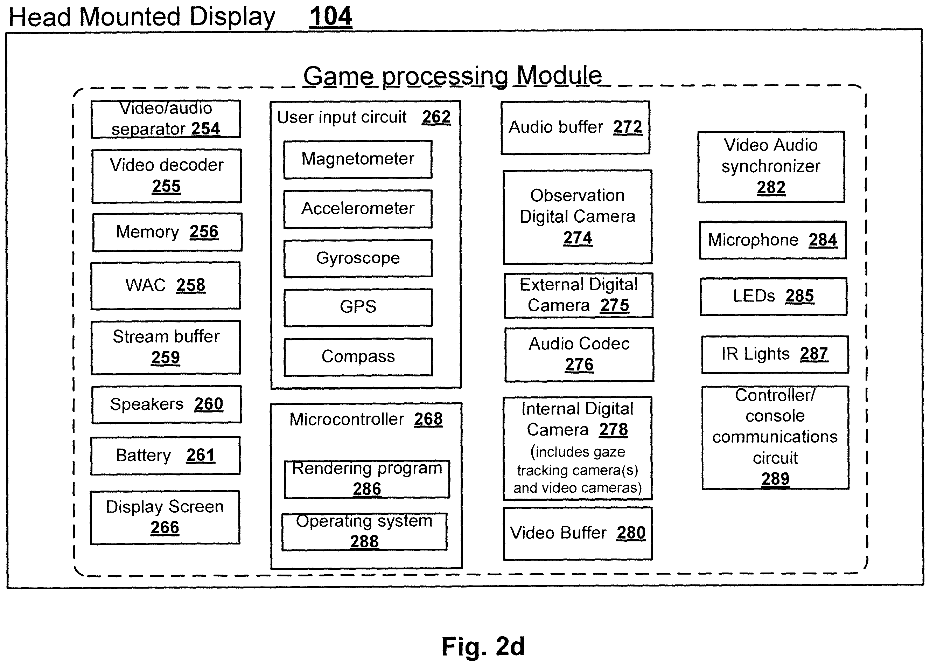

Figure 2D is a block diagram of a communication architecture of an HMD 104. The HMD 104 includes a video audio separator 254, a video decoder 255, a memory device 256, a wireless access card (WAC) 258, a stream buffer 259, one or more speakers 260, a battery 261, a user input circuit 262, a display screen 266, a microcontroller 268, an audio buffer 272, an observation digital camera 274, an external digital camera 275 an audio codec 276, an internal digital camera 278, a video buffer 280, a video audio synchronizer 282, a microphone 284, LEDs 285 and IR lights 287. The LEDs 285 and IR lights 287 represent the marker elements that are used to track the position of the HMD.

In a number of embodiments, the speakers 260 are an audio circuit. In various embodiments, the audio codec 276, the audio buffer 272, and/or the speakers 260 are an audio circuit. In various embodiments, the microcontroller 268 is a display circuit. Examples of a display screen 266 include an LED screen, a liquid crystal display (LCD) screen, a liquid crystal on silicon screen, an organic LED (OLED) screen, a plasma screen, etc. An example of the external digital camera includes a fist eye camera, such as PlayStation Eye^{®} manufactured by Sony Computer Entertainment, Inc.

The microcontroller 268 stores a rendering program 286 and an operating system 288. The rendering program 286 and the operating system 288 are stored in a memory device of the microcontroller 286 and executed by a microprocessor of the microcontroller 268. An example of microcontroller 268 includes a low cost microcontroller that includes a driver, e.g., an LCD driver, that drives, e.g., generates a signal to provide to, generate a signal to detect, etc., elements, e.g., LCDs, of the display screen 266 to display a game on the display screen 266. Another example of the microcontroller includes a GPU and a memory device.

In some embodiments, the memory device of the microcontroller is other than a flash memory or a random access memory (RAM). For example, memory device of the microcontroller is a buffer. In various embodiments, memory device of the microcontroller is Flash or a RAM. Examples of the user input circuit 262 include a gyroscope, a magnetometer, and an accelerometer. In some embodiments, the user input circuit 262 also includes a global position system (GPS), compass or any location tracking devices. An example of the WAC 258 includes a NIC. In some embodiments, the WAC 258 is referred to herein as a communications circuit.

A stream of encoded media data is received into the stream buffer 259 from the network 110 or the router 152. It should be noted that when the router 152 is coupled to the computer 172, data received from the computer 172 is stored in a buffer (not shown) of the HMD 250 or in the memory device 256 instead of being stored in the stream buffer 259.

The WAC 258 accesses the stream of encoded media data from the stream buffer 259 and depacketizes the stream. The WAC 258 also includes a decoder to decode the encoded media data.

In embodiments in which the stream of encoded media data is received by the computer 172 via the router 152, the NIC 174 of the computer 172 depacketizes and decodes the stream of encoded media data to generate decoded data, which is stored in the buffer (not shown) of the HMD 250.

The decoded data is accessed by the video audio separator 254 from the WAC 258 or from the buffer (not shown). The video audio separator 254 separates audio data within the decoded data from video data.

The video audio separator 254 sends the audio data to the audio buffer 272 and the video data to the video buffer 280. The video decoder 255 decodes, e.g., changes from a digital form to an analog form, etc., the video data to generate analog video signals. The video audio synchronizer 282 synchronizes the video data stored in the video buffer 280 with the audio data stored in the audio buffer 272. For example, the video audio synchronizer 282 uses a time of playback of the video data and the audio data to synchronize the video data with the audio data.

The audio codec 276 converts the synchronized audio data from a digital format into an analog format to generate audio signals and the audio signals are played back by the speakers 260 to generate sound. The microcontroller 268 executes the rendering program 286 to display a game on the display screen 266 based on the analog video signals that are generated by the video decoder 255. In some embodiments, the game displayed on the display screen 266 is displayed synchronous with the playback of the audio signals.

Moreover, when the user speaks into the microphone 284, the audio codec 276 converts sound signals to electrical signals, e.g., audio signals. The audio codec 276 converts the audio signals from an analog format to a digital format to generate audio data, which is stored in the audio buffer 272. The audio data stored in the audio buffer 272 is an example of input data generated based on a sound of the user 108. The audio data is accessed by the WAC 258 from the audio buffer 272 to send via the network 110 to the codec 112 of the game cloud 102. For example, the WAC 258 packetizes and encodes the audio data accessed from the audio buffer 272 to send via the network 110 to the codec 112.

In some embodiments, the audio data is accessed by the WAC 258 from the audio buffer 272 to send via the router 152 and the network 110 to the codec of the game cloud 102. For example, the WAC 258 packetizes and encodes the audio data accessed from the audio buffer 272 to send via the router 152 and the network 110 to the codec.

The internal digital camera 278 (103 of Figure 1, 109 of Figure 2B) captures one or more images of the head motions and/or eye motions of the user 108 to generate image data, which is an example of input data that is generated based on the head and/or eye motions. Similarly, the observation digital camera 274 (camera 171) captures one or more images of markers located on the HMD 250 and/or on the HHC/glove/hand of the user 108 to generate image data, which is an example of input data that is generated based on the hand motions/gestures. In some embodiments, images may also be captured by the external digital camera 275 (camera 101) mounted on the HMD. The image data captured by the digital cameras 274, 275 and 278 is stored in the video buffer 280.

In some embodiments, the image data captured by the digital cameras 274, 275 and 278 is stored in a buffer of the HMD 250 and the buffer is other than the video buffer 280. In various embodiments, the image data captured by the digital cameras 274, 275 and 278 is decoded by the video decoder 255 and sent to the microcontroller 268 for display of images on the display screen 266.

The image data captured by the digital cameras 274, 275 and 278 is accessed by the WAC (wireless access card) 258 from the video buffer 280 to send via the network 110 to the codec of the game cloud 102. For example, the WAC 258 packetizes and encodes the image data accessed from the video buffer 280 to send via the network 110 to the codec.

In some embodiments, the video data is accessed by the WAC 258 from the video buffer 280 to send via the router 152 and the network 110 to the codec 112 of the game cloud 102. For example, the WAC 258 packetizes and encodes the video data accessed from the video buffer 280 to send via the router 152 and/or the network 110 to the codec 112.

The controller/console communications circuit 289 receives media data from the computer 172 for storage in the buffer (not shown). Moreover, the controller/console communications circuit 289 receives input signals from the HHC 106, converts the input signals from an analog form to a digital form to generate input data, which is accessed by the WAC 258 to send via the network 110 to the codec of the game cloud 102. For example, the WAC 258 packetizes and encodes the input data accessed from the controller/console communications circuit 289 to send via the network 110 to the codec.

In some embodiments, the input data is accessed by the WAC 258 from the controller/console communications circuit 289 to send via the router 152 and the network 110 to the codec of the game cloud 102. For example, the WAC 258 packetizes and encodes the video data accessed from the video buffer 280 to send via the router 152 and the network 110 to the codec.

It should be noted that instead of the controller/console communications circuit 289, two separate communications circuits may be used, one for communicating, e.g., receiving, sending, etc., data with the computer 172 and another for communicating data with the HHC 106.

In a number of embodiments, the decoder is located outside the WAC 258. In various embodiments, the stream buffer 259 is located within the WAC 258.

In some embodiments, the HMD 104 excludes the observation digital camera 274. In several embodiments, the HMD 104 includes any number of microcontrollers, any number of buffers, and/or any number of memory devices.

In various embodiments, the HMD 104 includes one or more batteries 261 that provide power to components, e.g., the video audio separator 254, the memory device 256, the wireless access card 258, the stream buffer 259, the one or more speakers 260, the user input circuit 262, the display screen 266 the microcontroller 268, the audio buffer 272, the external digital camera 274, the audio codec 276, the internal digital camera 278, the video buffer 280, the video audio synchronizer 282, and the microphone 284. The one or more batteries 261 are charged with a charger (not shown) that can be plugged into an alternating current outlet.

In a number of embodiments, input data and/or media data is referred to herein as interactive media.

In some embodiments, the HMD 104 includes a communications circuit to facilitate peer-to-peer multichannel communication between local users via pairing. For example, the HMD 104 includes a transceiver that modulates sound signals received from the microphone 284 and sends the modulated signals via a channel to a transceiver of another HMD (not shown). The transceiver of the other HMD demodulate the signals to provide to speakers of the other HMD to facilitate communication between the users.

In various embodiments, different channels are used by the transceiver of the HMD 104 to communicate with different other HMDs. For example, a channel over which the modulated signals are sent to a first other HMD is different than a channel over which modulated signals are sent to a second other HMD.

In some embodiments, the WAC 258, the user input circuit 262, the microcontroller 268 and the video decoder 255 are integrated in one or more individual circuit chips. For example, the WAC 258, the video decoder 255 and the microcontroller 268 are integrated in one circuit chip and the user input circuit 262 is integrated into another circuit chip. As another example, each of the WAC 258, the user input circuit 262, the microcontroller 268 and the video decoder 255 is integrated in a separate circuit chip.

The various modules of the HMD are used to identify a user, determine the user's optical preferences and adjust resolution of the screen based on the user's optical preferences. In some embodiments, the modules within the HMD are collectively termed "Game Processing Module". The game processing module (or application processing module) of HMD allows for a user to provide input to identify the user's optical characteristics and to adjust the optical setting (i.e., screen resolution) of the screen to enable a user to have an enriching interactive experience. The embodiments provide ways to determine the optical preferences of the user including conducting an interactive virtual vision test using the screen of the HMD. As the screen of the HMD is configured to render three dimensional rendition of objects, it is easier to digitally create modeling of optics for conducting such tests using the three-dimensional (3D) space. Thus, using the digital modeling of 3D optics, the user is presented with images of varying sizes at one or more virtual distances to correctly gauge the optical characteristics of the user's vision. This information can be used to adjust the focus and other optical settings of the screen to meet the requirements of the user's vision.

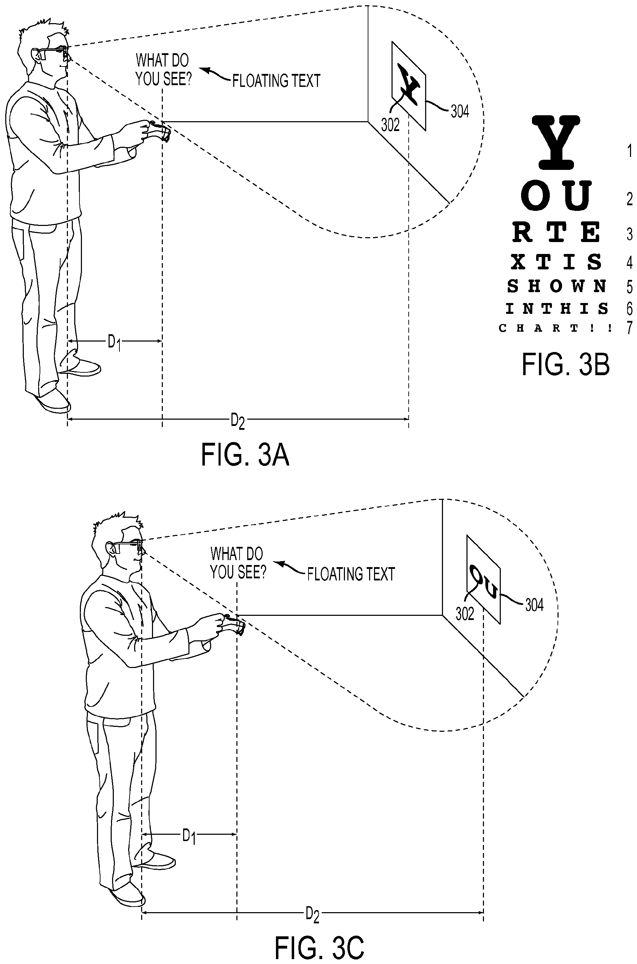

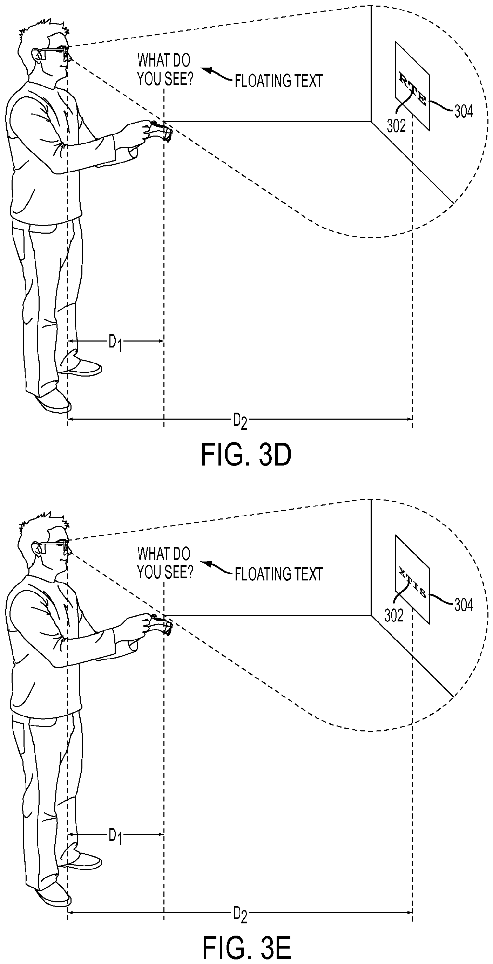

Figures 3A-3F illustrate an embodiment, wherein a program is executed to gauge the optical preferences or requirements of a user so that the HMD can use the preferences/requirements to customize the optical settings of the HMD for the user so that the user is able to view and interact in the interactive game/program in a meaningful way. In some embodiments, an interactive program is executed. The program causes rendition of images on the screen of the HMD worn by the user and requires input from the user to determine the clarity level of the presented images. Input from the user is used to determine the user's optical requirements and a resolution of the screen of the HMD is adjusted accordingly, for the user. In some embodiments, the program is executed on a computer that is communicatively connected to the HMD and the HMD is provided images from the computer. In some other embodiments, the program is executed on the HMD itself and the program provides images for user interaction and feedback. In other embodiments, the program executes on the game cloud and the images are streamed to the HMD and user feedback are processed at the cloud. In some embodiments, the program is partially executed on the computer, partially on the HMD and/or partially executed on the game cloud.

As illustrated in Figure 3A, the program presents an image to a user on the screen of the HMD and requests feedback from the user. The image is of a distinct size and is presented at a virtual distance on the screen. In one embodiment, the image is any one of text, geometric shape, animated graphics, or any other renderable object. In one embodiment, the image 302 is presented at a virtual distance D2 within the virtual space that is rendered on the screen. In one embodiment, the image 302 is rendered within a region 304 within the virtual space that is at a virtual distance D2 from the user's eyes. The user is then requested to identify the image. In one embodiment, the request for identifying the image may be rendered in audio format, or a visual format. In one embodiment illustrated in Figure 3A, the request presented in the visual format is in the form of a floating text. In some embodiments, the floating text is presented in the virtual space at a virtual distance that is different from the virtual distance D2 at which the image 302 is rendered. For example, the floating text may be rendered at a virtual distance D1 from the user. The virtual distance D1 where the request is presented is less than the virtual distance D2 where the image is presented. In response to the request, the user provides a feedback. The feedback may be in the form of audio feedback, feedback using the HHC or other input device, such as a keyboard of a computer, a mouse, etc. Depending on the feedback from the user, one or more additional images may be presented to the user to further test the user's vision.

Figure 3B illustrates a test chart that may be used to present the images to the user for determining the user's optical preferences/requirements. The test chart, in one embodiment, includes a plurality of lines of images of differing sizes and the program presents images from each line to further test the user's optical requirements based on the user's feedback for the images from the previous lines.

Figures 3C-3E illustrate the different images that are presented to the user in the 3D virtual space, depending on the user's feedback for the image presented from the first line of the test chart (Figure 3B). Thus, the program retrieves and renders the images from the second and subsequent lines of the test chart with the images that are progressively decreasing in size. The images are all presented within the region 304 at the virtual distance D2 and the floating text continues to render at virtual distance D1. In some embodiments, the images rendered on the screen are presented in a floating image format with in the 3D space. The user's input in response to the rendering of the various images, provide clarity level feedback for the respective images. Using the clarity level feedback from the user, the program computes the user's desirable optical setting and adjusts the head mounted displays optical setting to a second setting that is in accordance to the user's desirable setting.

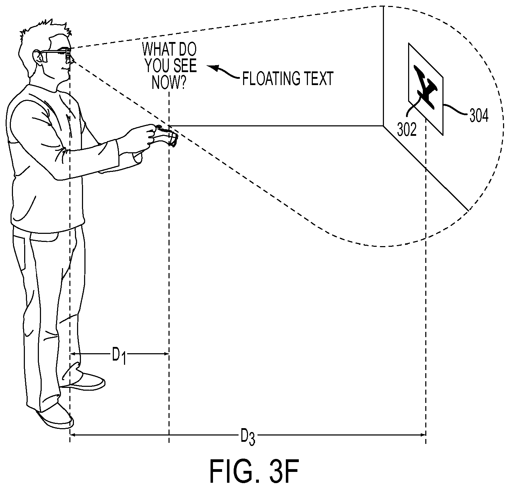

Alternately, depending on the user's feedback to the first image, the program may determine that the distance D2 at which the images are being rendered needs to be adjusted. Figure 3F illustrates an example not forming part of the invention. In response to the user's feedback for the image 302 rendered in the region 304 in Figure 3A, the program may adjust the virtual distance D2 at which the image is rendered to a virtual distance D3, wherein the virtual distance D3 is less than the virtual distance D2. In some embodiments, the adjustment of the virtual distance D2 may result in the image being rendered at a virtual distance D4 (not shown) that is farther than the virtual distance D2. In one embodiment, the distance adjustment is effectuated by presenting the image in a larger size making it appear that the image was moved closer. Alternately, virtual distance adjustment may be effectuated by presenting the images in a smaller size to make it appear that the images were moved farther. For example, depending on the feedback for a first image, the second image rendered may be larger in size than the first image. This type of adjustment within the 3D space allows the program to provide varied levels of adjustment for the optical setting, making this a very effective way of determining the optical requirements of the user. In this embodiment, the floating text may continue to be rendered at distance D1. The user's feedback is used by the program to determine what level of resolution/focus adjustment needs to be made at the HMD for rendering images of an interactive application program/game when the user uses the HMD to play/interact with the game/ application program.

In one embodiment, the HMD may have multiple optical setting adjustments defined for rendering the images and the program will determine which optical setting adjustment to use for providing interactive images from an interactive game to the user when the user uses the HMD for playing such interactive game. In one embodiment, the user's settings are saved in the respective user's profile at the HMD so that these settings may be used to automatically adjust the focus of the images rendered on the screen of the HMD, when the user next uses the HMD. In some embodiments, the program may render one image from the test chart at a time. In other embodiments, the program may render multiple images from the test chart and request the user's feedback for each of the images. In some embodiments, the multiple images rendered simultaneously may be of different sizes and the user feedback at each of the different images is used to adjust the optical settings for the user.

In some embodiments, the HMD may be used by different users to play an interactive game. As a result, the HMD may determine optical settings of each user by accessing the user profile of the respective users maintained at the HMD. In one embodiment, the user profile may be identified based on the user's identity maintained in the user profile. In one embodiment, the user's identity is established using a biometric identity. In some embodiments, the biometric identity is established using one of retina scanning or iris scanning technique. The biometric identity mentioned above is just one exemplary identity and other types of biometric or forms of identity may be used to identify the user. Based on the optical settings of the user in the user profile, the HMD automatically adjusts the optical settings of the screen of the HMD.

In one embodiment, in addition to determining the preferred optical settings for a user using the interactive program rendering images, the user may be presented with list of optical prescription settings on a user interface that is rendered on the screen of the HMD. User's selection of the optical prescription settings from the list may be used in conjunction with or in place of the feedback for the program rendering images to tune or fine-tune the optical settings of the screen of the HMD. In some embodiments, the program may also be used to adjust color characteristics for users that are colorblind. In such embodiments, the images rendered for determining preferred optical settings may be color coded and user input to the color coded images may be used to adjust the color characteristics for the user. The program provides a user with the ability to adjust the focus/resolution for the screen of the HMD that compensates for the user's optical characteristic deficiencies of the user's vision.

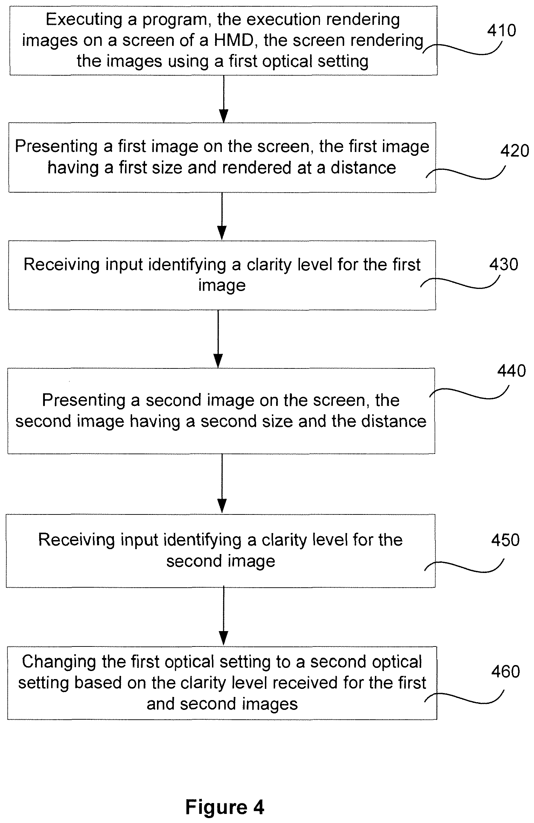

Figure 4 illustrates method operations for operating a screen of a head mounted display, in one embodiment of the invention. The method begins at operation 410, when a program is executed. The program is configured to render images on the screen of the HMD. The screen of the HMD rendering the images is set at a first optical setting so that the images rendered are in accordance to the first optical setting. A first image having a first size is presented on the screen at a virtual distance determined based the first optical setting, as illustrated in operation 420. The distance may be a virtual distance and the image may be presented in a three dimensional space. In some embodiments, the image is presented at a fixed region identified at the virtual distance on the screen. User input is received to identify a clarity level for the first image, as illustrated in operation 430. The clarity level may be identified based on the user identifying the image. The user input to identify a clarity level may be in the form of a audio feedback, a feedback provided using the HHC or other input device that is communicatively connected to the HMD and/or the computer that is executing the program providing the images.

A second image having a second size is presented on the screen at the same distance, as illustrated in operation 440. The second image may be presented at the same region where the first image was rendered. User input identifying a clarity level for the second image, is received in response to the rendering of the second image, as illustrated in operation 450. In response to receiving the user's input for the first and the second images, the optical setting for the screen of the HMD is changed from the first optical setting to the second optical setting, as illustrated in operation 460. The changed optical setting is used for presenting any streaming or interactive images for a game or any interactive program the user interacts/plays using the HMD.

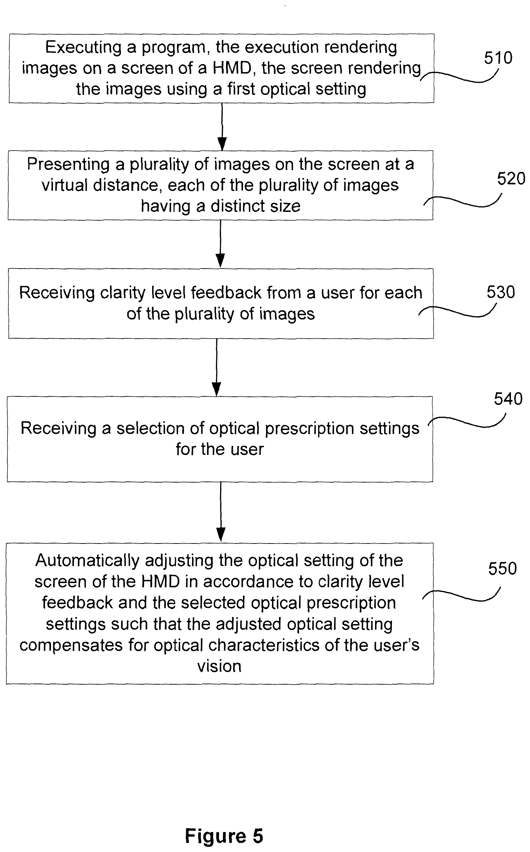

Figure 5 illustrates method operations for operating a screen of a head mounted display, in one embodiment of the invention. The method begins at operation 510, wherein a program is executed. The program may be executed on a computer or on a game cloud that is communicatively connected to the HMD or may be executed on the HMD itself. The program causes rendering of images on the screen of the HMD. The images can be any one of text, animated graphics, image of renderable objects, etc. The plurality of images of any one type or multiple types are presented on the screen at a virtual distance, as illustrated in operation 520. Each of the plurality of images have a distinct size. Clarity level feedback from a user is received for each of the plurality of images, as illustrated in operation 530. The clarity level feedback is based on the user's recognition of the images and may be presented in any form, such as audio form, input using an HHC or any other input device, etc.

A selection of optical prescription settings is received from the user, as illustrated in operation 540. The optical prescription settings may be selected from a list of optical prescription settings provided in a user interface on the screen of the HMD or may be provided by a user using any input device. In response to receiving the feedback for the clarity level and the optical prescription settings from the user, the optical setting of the screen is automatically adjusted in accordance to the clarity level feedback and the selected optical prescription settings, as illustrated in operation 550. The adjusted optical setting of the screen of the HMD compensates for optical deficiencies or matches the optical characteristics of the user's vision. The optical setting of the screen of the HMD is used for rendering interactive game scenes and other interactive application media data for the user when the user uses the HMD to play the game or interactive application.

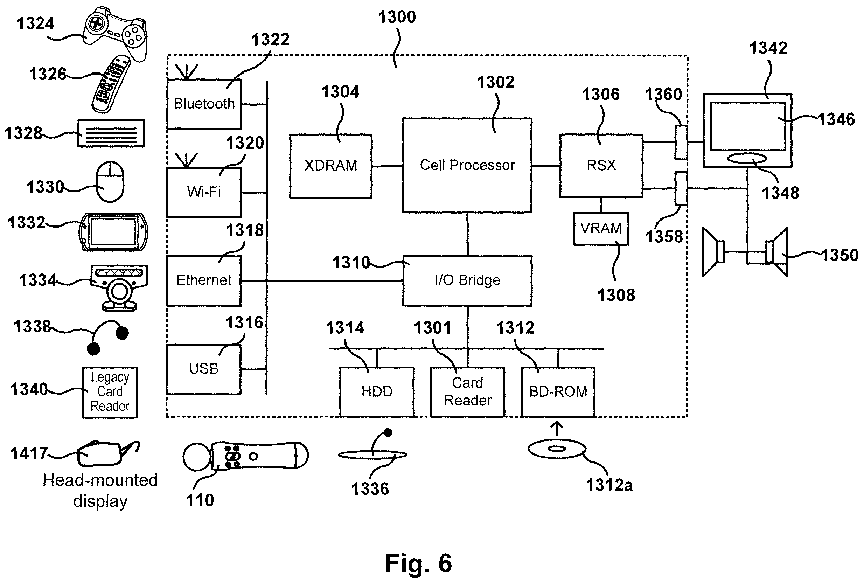

Figure 6 illustrates hardware and user interfaces that may be used to implement embodiments of the invention. Figure 6 schematically illustrates the overall system architecture of the Sony^{®} PlayStation 3^{®} entertainment device. A system unit 1300 is provided, with various peripheral devices connectable to the system unit 1300. The system unit 1300 includes: a Cell processor 1302; a Rambus^{®} dynamic random access memory (XDRAM) unit 1304; a Reality Synthesizer graphics unit 1306 with a dedicated video random access memory (VRAM) unit 1308; and an I/O bridge 1310. The system unit 1300 also comprises a Blu Ray^{®} Disk BD-ROM^{®} optical disk reader 1312 for reading from a disk 1312a and a removable slot-in hard disk drive (HDD) 1314, accessible through the I/O bridge 1310. Optionally, the system unit 1300 also comprises a memory card reader 1301 for reading compact flash memory cards, Memory Stick^{®} memory cards and the like, which is similarly accessible through the I/O bridge 1310.

The I/O bridge 1310 also connects to six Universal Serial Bus (USB) 2.0 ports 1316; a gigabit Ethernet port 1318; an IEEE 802.11b/g wireless network (Wi-Fi) port 1320; and a Bluetooth^{®} wireless link port 1322 capable of supporting of up to seven Bluetooth connections.

In operation, the I/O bridge 1310 handles all wireless, USB and Ethernet data, including data from one or more game controllers 110 and 1324. For example, when a user is playing a game, the I/O bridge 1310 receives data from the game controller 110 and 1324 via a Bluetooth link and directs it to the Cell processor 1302, which updates the current state of the game accordingly.

The wireless, USB and Ethernet ports also provide connectivity for other peripheral devices in addition to game controllers 110 and 1324, such as: a remote control 1326; a keyboard 1328; a mouse 1330; a portable entertainment device 1332 such as a Sony PSP^{®} entertainment device; a video camera such as a PlayStation^{®} Eye Camera 1334; a shape object 1336; and a microphone 1338. Such peripheral devices may therefore in principle be connected to the system unit 1300 wirelessly; for example, the portable entertainment device 1332 may communicate via a Wi-Fi ad-hoc connection, while the shape object 1336 may communicate via a Bluetooth link.

The provision of these interfaces means that the PlayStation 3 device is also potentially compatible with other peripheral devices such as digital video recorders (DVRs), set-top boxes, digital cameras, portable media players, Voice over Internet Protocol (IP) telephones, mobile telephones, printers and scanners. In addition, a legacy memory card reader 1340 may be connected to the system unit via a USB port 1316, enabling the reading of memory cards of the kind used by the PlayStation^{®} or PlayStation 2^{®} devices.

The game controllers 110 and 1324 are operable to communicate wirelessly with the system unit 1300 via the Bluetooth link, or to be connected to a USB port, thereby also providing power by which to charge the battery of the game controllers 110 and 1324. Game controllers 110 and 1324 can also include memory, a processor, a memory card reader, permanent memory such as flash memory, light emitters such as an illuminated spherical section, light emitting diodes (LEDs), or infrared lights, microphone and speaker for ultrasound communications, an acoustic chamber, a digital camera, an internal clock, a recognizable shape facing the game console, and wireless communications using protocols such as Bluetooth^{®}, WiFi^{™}, etc. The recognizable shape can be in a shape substantially of a sphere, a cube, parallelogram, a rectangular parallelepiped, a cone, a pyramid, a soccer ball, a football or rugby ball, an imperfect sphere, a section of a sphere, a truncated pyramid, a truncated cone, a baseball bat, a truncated cube, a polyhedron, a star, etc., or a combination of two of more of these shapes.

Game controller 1324 is a controller designed to be used with two hands, and game controller 110 is a single-hand controller with a ball attachment. In addition to one or more analog joysticks and conventional control buttons, the game controller is susceptible to three-dimensional location determination. Consequently gestures and movements by the user of the game controller may be translated as inputs to a game in addition to or instead of conventional button or joystick commands. Optionally, other wirelessly enabled peripheral devices such as the Sony PSP^{®} portable device may be used as a controller. In the case of the Sony PSP^{®} portable device, additional game or control information (for example, control instructions or number of lives) may be provided on the screen of the device. Other alternative or supplementary control devices may also be used, such as a dance mat (not shown), a light gun (not shown), a steering wheel and pedals (not shown) or bespoke controllers, such as a single or several large buttons for a rapid-response quiz game (also not shown).

The remote control 1326 is also operable to communicate wirelessly with the system unit 1300 via a Bluetooth link. The remote control 1326 comprises controls suitable for the operation of the Blu Ray^{™} Disk BD-ROM reader 1312 and for the navigation of disk content.

The Blu Ray^{™} Disk BD-ROM reader 1312 is operable to read CD-ROMs compatible with the PlayStation and PlayStation 2 devices, in addition to conventional pre-recorded and recordable CDs, and so-called Super Audio CDs. The reader 1312 is also operable to read DVD-ROMs compatible with the PlayStation 2 and PlayStation 3 devices, in addition to conventional pre-recorded and recordable DVDs. The reader 1312 is further operable to read BD-ROMs compatible with the PlayStation 3 device, as well as conventional pre-recorded and recordable Blu-Ray Disks.

The system unit 1300 is operable to supply audio and video, either generated or decoded by the PlayStation 3 device via the Reality Synthesizer graphics unit (RSX) 1306, through audio and video connectors to a display and sound output device 1342 such as a monitor or television set having a display 1346 and one or more loudspeakers 1348, or stand-alone speakers 1350. In one embodiment, voice and gaze inputs are utilized to play sound toward specific audio speakers according to the POG of the user. The audio connectors 1358 may include conventional analogue and digital outputs while the video connectors 1360 may variously include component video, S-video, composite video and one or more High Definition Multimedia Interface (HDMI) outputs. Consequently, video output may be in formats such as PAL or NTSC, or in 720p, 1080i or 1080p high definition.

Audio processing (generation, decoding and so on) is performed by the Cell processor 1302. The PlayStation 3 device's operating system supports Dolby^{®} 5.1 surround sound, Dolby^{®} Theatre Surround (DTS), and the decoding of 7.1 surround sound from Blu-Ray^{®} disks.

In the present embodiment, the video camera 1334 comprises a single Charge Coupled Device (CCD), an LED indicator, and hardware-based real-time data compression and encoding apparatus so that compressed video data may be transmitted in an appropriate format such as an intra-image based MPEG (motion picture expert group) standard for decoding by the system unit 1300. The camera LED indicator is arranged to illuminate in response to appropriate control data from the system unit 1300, for example to signify adverse lighting conditions. Embodiments of the video camera 1334 may variously connect to the system unit 1300 via a USB, Bluetooth or Wi-Fi communication port. Embodiments of the video camera may include one or more associated microphones and also be capable of transmitting audio data. In embodiments of the video camera, the CCD may have a resolution suitable for high-definition video capture. In use, images captured by the video camera may, for example, be incorporated within a game or interpreted as game control inputs. In another embodiment, the camera is an infrared camera suitable for detecting infrared light.

In general, in order for successful data communication to occur with a peripheral device such as a video camera or remote control via one of the communication ports of the system unit 1300, an appropriate piece of software such as a device driver should be provided. Device driver technology is well-known and will not be described in detail here, except to say that the skilled man will be aware that a device driver or similar software interface may be required in the present embodiment described.

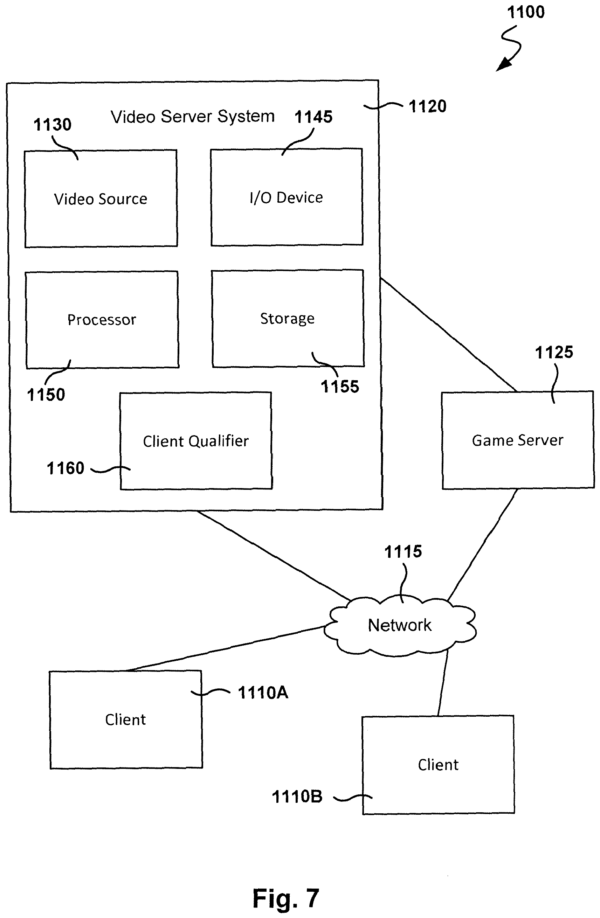

Figure 7 is a block diagram of a Game System 1100, according to various embodiments of the invention. Game System 1100 is configured to provide a video stream to one or more Clients 1110 via a Network 1115. Game System 1100 typically includes a Video Server System 1120 and an optional game server 1125. Video Server System 1120 is configured to provide the video stream to the one or more Clients 1110 with a minimal quality of service. For example, Video Server System 1120 may receive a game command that changes the state of or a point of view within a video game, and provide Clients 1110 with an updated video stream reflecting this change in state with minimal lag time. The Video Server System 1120 may be configured to provide the video stream in a wide variety of alternative video formats, including formats yet to be defined. Further, the video stream may include video frames configured for presentation to a user at a wide variety of frame rates. Typical frame rates are 30 frames per second, 60 frames per second, and 1120 frames per second. Although higher or lower frame rates are included in alternative embodiments of the invention.

Clients 1110, referred to herein individually as 1110A., 1110B., etc., may include head mounted displays, terminals, personal computers, game consoles, tablet computers, telephones, set top boxes, kiosks, wireless devices, digital pads, stand-alone devices, handheld game playing devices, and/or the like. Typically, Clients 1110 are configured to receive encoded video streams, decode the video streams, and present the resulting video to a user, e.g., a player of a game. The processes of receiving encoded video streams and/or decoding the video streams typically includes storing individual video frames in a receive buffer of the client. The video streams may be presented to the user on a display integral to Client 1110 or on a separate device such as a monitor or television. Clients 1110 are optionally configured to support more than one game player. For example, a game console may be configured to support two, three, four or more simultaneous players. Each of these players may receive a separate video stream, or a single video stream may include regions of a frame generated specifically for each player, e.g., generated based on each player's point of view. Clients 1110 are optionally geographically dispersed. The number of clients included in Game System 1100 may vary widely from one or two to thousands, tens of thousands, or more. As used herein, the term "game player" is used to refer to a person that plays a game and the term "game playing device" is used to refer to a device used to play a game. In some embodiments, the game playing device may refer to a plurality of computing devices that cooperate to deliver a game experience to the user. For example, a game console and an HMD may cooperate with the video server system 1120 to deliver a game viewed through the HMD. In one embodiment, the game console receives the video stream from the video server system 1120, and the game console forwards the video stream, or updates to the video stream, to the HMD for rendering.

Clients 1110 are configured to receive video streams via Network 1115. Network 1115 may be any type of communication network including, a telephone network, the Internet, wireless networks, powerline networks, local area networks, wide area networks, private networks, and/or the like. In typical embodiments, the video streams are communicated via standard protocols, such as TCP/IP or UDP/IP. Alternatively, the video streams are communicated via proprietary standards.

A typical example of Clients 1110 is a personal computer comprising a processor, nonvolatile memory, a display, decoding logic, network communication capabilities, and input devices. The decoding logic may include hardware, firmware, and/or software stored on a computer readable medium. Systems for decoding (and encoding) video streams are well known in the art and vary depending on the particular encoding scheme used.

Clients 1110 may, but are not required to, further include systems configured for modifying received video. For example, a client may be configured to perform further rendering, to overlay one video image on another video image, to crop a video image, and/or the like. For example, Clients 1110 may be configured to receive various types of video frames, such as I-frames, P-frames and B-frames, and to process these frames into images for display to a user. In some embodiments, a member of Clients 1110 is configured to perform further rendering, shading, conversion to 3-D, or like operations on the video stream. A member of Clients 1110 is optionally configured to receive more than one audio or video stream. Input devices of Clients 1110 may include, for example, a one-hand game controller, a two-hand game controller, a gesture recognition system, a gaze recognition system, a voice recognition system, a keyboard, a joystick, a pointing device, a force feedback device, a motion and/or location sensing device, a mouse, a touch screen, a neural interface, a camera, input devices yet to be developed, and/or the like.

The video stream (and optionally audio stream) received by Clients 1110 is generated and provided by Video Server System 1120. As is described further elsewhere herein, this video stream includes video frames (and the audio stream includes audio frames). The video frames are configured (e.g., they include pixel information in an appropriate data structure) to contribute meaningfully to the images displayed to the user. As used herein, the term "video frames" is used to refer to frames including predominantly information that is configured to contribute to, e.g. to effect, the images shown to the user. Most of the teachings herein with regard to "video frames" can also be applied to "audio frames."

Clients 1110 are typically configured to receive inputs from a user. These inputs may include game commands configured to change the state of the video game or otherwise affect game play. The game commands can be received using input devices and/or may be automatically generated by computing instructions executing on Clients 1110. The received game commands are communicated from Clients 1110 via Network 1115 to Video Server System 1120 and/or Game Server 1125. For example, in some embodiments, the game commands are communicated to Game Server 1125 via Video Server System 1120. In some embodiments, separate copies of the game commands are communicated from Clients 1110 to Game Server 1125 and Video Server System 1120. The communication of game commands is optionally dependent on the identity of the command. Game commands are optionally communicated from Client 1110A through a different route or communication channel that that used to provide audio or video streams to Client 1110A.

Game Server 1125 is optionally operated by a different entity than Video Server System 1120. For example, Game Server 1125 may be operated by the publisher of a multiplayer game. In this example, Video Server System 1120 is optionally viewed as a client by Game Server 1125 and optionally configured to appear from the point of view of Game Server 1125 to be a prior art client executing a prior art game engine. Communication between Video Server System 1120 and Game Server 1125 optionally occurs via Network 1115. As such, Game Server 1125 can be a prior art multiplayer game server that sends game state information to multiple clients, one of which is game server system 1120. Video Server System 1120 may be configured to communicate with multiple instances of Game Server 1125 at the same time. For example, Video Server System 1120 can be configured to provide a plurality of different video games to different users. Each of these different video games may be supported by a different Game Server 1125 and/or published by different entities. In some embodiments, several geographically distributed instances of Video Server System 1120 are configured to provide game video to a plurality of different users. Each of these instances of Video Server System 1120 may be in communication with the same instance of Game Server 1125. Communication between Video Server System 1120 and one or more Game Server 1125 optionally occurs via a dedicated communication channel. For example, Video Server System 1120 may be connected to Game Server 1125 via a high bandwidth channel that is dedicated to communication between these two systems.

Video Server System 1120 comprises at least a Video Source 1130, an I/O Device 1145, a Processor 1150, and non-transitory Storage 1155. Video Server System 1120 may include one computing device or be distributed among a plurality of computing devices. These computing devices are optionally connected via a communications system such as a local area network.

Video Source 1130 is configured to provide a video stream, e.g., streaming video or a series of video frames that form a moving picture. In some embodiments, Video Source 1130 includes a video game engine and rendering logic. The video game engine is configured to receive game commands from a player and to maintain a copy of the state of the video game based on the received commands. This game state includes the position of objects in a game environment, as well as typically a point of view. The game state may also include properties, images, colors and/or textures of objects. The game state is typically maintained based on game rules, as well as game commands such as move, turn, attack, set focus to, interact, use, and/or the like. Part of the game engine is optionally disposed within Game Server 1125. Game Server 1125 may maintain a copy of the state of the game based on game commands received from multiple players using geographically disperse clients. In these cases, the game state is provided by Game Server 1125 to Video Source 1130, wherein a copy of the game state is stored and rendering is performed. Game Server 1125 may receive game commands directly from Clients 1110 via Network 1115, and/or may receive game commands via Video Server System 1120.

Video Source 1130 typically includes rendering logic, e.g., hardware, firmware, and/or software stored on a computer readable medium such as Storage 1155. This rendering logic is configured to create video frames of the video stream based on the game state. All or part of the rendering logic is optionally disposed within a graphics processing unit (GPU). Rendering logic typically includes processing stages configured for determining the three-dimensional spatial relationships between objects and/or for applying appropriate textures, etc., based on the game state and viewpoint. The rendering logic produces raw video that is then usually encoded prior to communication to Clients 1110. For example, the raw video may be encoded according to an Adobe Flash^{®} standard, .wav, H.264, H.263, On2, VP6, VC-1, WMA, Huffyuv, Lagarith, MPG-x. Xvid. FFmpeg, x264, VP6-8, realvideo, mp3, or the like. The encoding process produces a video stream that is optionally packaged for delivery to a decoder on a remote device. The video stream is characterized by a frame size and a frame rate. Typical frame sizes include 800 x 600, 1280 x 720 (e.g., 720p), 1024 x 768, although any other frame sizes may be used. The frame rate is the number of video frames per second. A video stream may include different types of video frames. For example, the H.264 standard includes a "P" frame and a "I" frame. I-frames include information to refresh all macro blocks/pixels on a display device, while P-frames include information to refresh a subset thereof. P-frames are typically smaller in data size than are I-frames. As used herein the term "frame size" is meant to refer to a number of pixels within a frame. The term "frame data size" is used to refer to a number of bytes required to store the frame.

In alternative embodiments Video Source 1130 includes a video recording device such as a camera. This camera may be used to generate delayed or live video that can be included in the video stream of a computer game. The resulting video stream, optionally includes both rendered images and images recorded using a still or video camera. Video Source 1130 may also include storage devices configured to store previously recorded video to be included in a video stream. Video Source 1130 may also include motion or positioning sensing devices configured to detect motion or position of an object, e.g., person, and logic configured to determine a game state or produce video-based on the detected motion and/or position.

Video Source 1130 is optionally configured to provide overlays configured to be placed on other video. For example, these overlays may include a command interface, log in instructions, messages to a game player, images of other game players, video feeds of other game players (e.g., webcam video). In embodiments of Client 1110A including a touch screen interface or a gaze detection interface, the overlay may include a virtual keyboard, joystick, touch pad, and/or the like. In one example of an overlay a player's voice is overlaid on an audio stream. Video Source 1130 optionally further includes one or more audio sources.

In embodiments wherein Video Server System 1120 is configured to maintain the game state based on input from more than one player, each player may have a different point of view comprising a position and direction of view. Video Source 1130 is optionally configured to provide a separate video stream for each player based on their point of view. Further, Video Source 1130 may be configured to provide a different frame size, frame data size, and/or encoding to each of Client 1110. Video Source 1130 is optionally configured to provide 3-D video.

I/O Device 1145 is configured for Video Server System 1120 to send and/or receive information such as video, commands, requests for information, a game state, gaze information, device motion, device location, user motion, client identities, player identities, game commands, security information, audio, and/or the like. I/O Device 1145 typically includes communication hardware such as a network card or modem. I/O Device 1145 is configured to communicate with Game Server 1125, Network 1115, and/or Clients 1110.

Processor 1150 is configured to execute logic, e.g. software, included within the various components of Video Server System 1120 discussed herein. For example, Processor 1150 may be programmed with software instructions in order to perform the functions of Video Source 1130, Game Server 1125, and/or a Client Qualifier 1160. Video Server System 1120 optionally includes more than one instance of Processor 1150. Processor 1150 may also be programmed with software instructions in order to execute commands received by Video Server System 1120, or to coordinate the operation of the various elements of Game System 1100 discussed herein. Processor 1150 may include one or more hardware device. Processor 1150 is an electronic processor.

Storage 1155 includes non-transitory analog and/or digital storage devices. For example, Storage 1155 may include an analog storage device configured to store video frames. Storage 1155 may include a computer readable digital storage, e.g. a hard drive, an optical drive, or solid state storage. Storage 1115 is configured (e.g. by way of an appropriate data structure or file system) to store video frames, artificial frames, a video stream including both video frames and artificial frames, audio frame, an audio stream, and/or the like. Storage 1155 is optionally distributed among a plurality of devices. In some embodiments, Storage 1155 is configured to store the software components of Video Source 1130 discussed elsewhere herein. These components may be stored in a format ready to be provisioned when needed.

Video Server System 1120 optionally further comprises Client Qualifier 1160. Client Qualifier 1160 is configured for remotely determining the capabilities of a client, such as Clients 1110A or 1110B. These capabilities can include both the capabilities of Client 1110A itself as well as the capabilities of one or more communication channels between Client 1110A and Video Server System 1120. For example, Client Qualifier 1160 may be configured to test a communication channel through Network 1115.

Client Qualifier 1160 can determine (e.g., discover) the capabilities of Client 1110A manually or automatically. Manual determination includes communicating with a user of Client 1110A and asking the user to provide capabilities. For example, in some embodiments, Client Qualifier 1160 is configured to display images, text, and/or the like within a browser of Client 1110A. In one embodiment, Client 1110A is an HMD that includes a browser. In another embodiment, client 1110A is a game console having a browser, which may be displayed on the HMD. The displayed objects request that the user enter information such as operating system, processor, video decoder type, type of network connection, display resolution, etc. of Client 1110A. The information entered by the user is communicated back to Client Qualifier 1160.

Automatic determination may occur, for example, by execution of an agent on Client 1110A and/or by sending test video to Client 1110A. The agent may comprise computing instructions, such as java script, embedded in a web page or installed as an add-on. The agent is optionally provided by Client Qualifier 1160. In various embodiments, the agent can find out processing power of Client 1110A, decoding and display capabilities of Client 1110A, lag time reliability and bandwidth of communication channels between Client 1110A and Video Server System 1120, a display type of Client 1110A, firewalls present on Client 1110A, hardware of Client 1110A, software executing on Client 1110A, registry entries within Client 1110A, and/or the like.

Client Qualifier 1160 includes hardware, firmware, and/or software stored on a computer readable medium. Client Qualifier 1160 is optionally disposed on a computing device separate from one or more other elements of Video Server System 1120. For example, in some embodiments, Client Qualifier 1160 is configured to determine the characteristics of communication channels between Clients 1110 and more than one instance of Video Server System 1120. In these embodiments the information discovered by Client Qualifier can be used to determine which instance of Video Server System 1120 is best suited for delivery of streaming video to one of Clients 1110.

Embodiments of the present invention may be practiced with various computer system configurations including hand-held devices, microprocessor systems, microprocessor-based or programmable consumer electronics, minicomputers, mainframe computers and the like. Several embodiments of the present invention can also be practiced in distributed computing environments where tasks are performed by remote processing devices that are linked through a wire-based or wireless network.

With the above embodiments in mind, it should be understood that a number of embodiments of the present invention can employ various computer-implemented operations involving data stored in computer systems. These operations are those requiring physical manipulation of physical quantities. Any of the operations described herein that form part of various embodiments of the present invention are useful machine operations.

Although the method operations were described in a specific order, it should be understood that other housekeeping operations may be performed in between operations, or operations may be adjusted so that they occur at slightly different times, or may be distributed in a system which allows the occurrence of the processing operations at various intervals associated with the processing, as long as the processing of the overlay operations are performed in the desired way.

Although the foregoing invention has been described in some detail for purposes of clarity of understanding, it will be apparent that certain changes and modifications can be practiced within the scope of the appended claims. Accordingly, the present embodiments are to be considered as illustrative and not restrictive, and the various embodiments of the present invention is not to be limited to the details given herein, but may be modified within the scope of the appended claims.

## Claims

1. A method for operating a screen of a head mounted display 'HMD' (104, 1417), comprising:
executing (410) a program, the execution rendering images generated by the program on the screen of the HMD, the screen being configured to render the images using digitally created modeling, which changes an optical setting that defines a size and a distance at which the image is being rendered, for the screen;
presenting (420) a first image on the screen using a first optical setting for the screen, the first image having a first size and rendered at a distance;
receiving (430) a first input identifying a clarity level for the first image;
presenting (440) a second image on the screen, the second image having a second size and rendered at the distance;
receiving (450) a second input identifying a clarity level for the second image;
changing (460) the first optical setting for the screen of the HMD to a second optical setting for the screen, based on the first and second inputs that identify the clarity level of the first and second images; and
storing the second optical setting to a user profile associated with the user, the second optical setting is configured to be automatically set for the screen of the HMD from the user profile of the user upon identification of the user,
wherein the first image and the second image are rendered in a three-dimensional virtual space, the first image and the second image being presented at the distance, wherein the distance is a virtual distance in the three-dimensional virtual space, wherein the three-dimensional virtual space is rendered on the screen so that the first image and the second image are presented at the virtual distance.

2. The method of claim 1, further comprising:
identifying a second user being associated with the HMD;
accessing a second user profile for the second user; and
automatically changing a current optical setting for the screen of the HMD to a new optical setting identified from the second user profile.

3. The method of claim 1, wherein the user profile includes data regarding biometric identity for identifying the user, the biometric identity is verified using one of retinal scanning or iris scanning via an internal camera of the HMD.

4. The method of claim 1, further comprising:
adjusting the second optical setting for the screen of the HMD in response to changes in the clarity level feedback obtained from the user; and
updating the second optical setting stored in the user profile of the user to reflect the adjustment.

5. A system for operating a screen of a head mounted display 'HMD' (104, 1417), comprising:
means (1302, 268) for executing a program, the execution rendering images generated by the program on the screen of the HMD, the screen being configured to render the images using digitally created modeling, which changes an optical setting that defines a size and a distance at which the image is being rendered, for the screen;
means (1302, 1306, 104, 1417) for presenting a plurality of images on the screen, such that the plurality of images are presented at a virtual distance in a three-dimensional virtual space, each of the plurality of images having a distinct size;
means (258, 289) for receiving clarity level feedback from the user for each of the plurality of images;
means (268) for automatically adjusting the optical setting for the screen of the HMD, such that the adjusted optical setting compensates for optical characteristics of the vision of the user; and
means (1314, 256) for storing the adjusted optical setting to a user profile associated with the user, the stored adjusted optical setting is configured to be automatically set for the screen of the HMD from the user profile of the user upon identification of the user,
wherein the plurality of images are rendered in a three-dimensional virtual space, the plurality of images being presented at the distance, wherein the distance is a virtual distance in the three-dimensional virtual space, wherein the three-dimensional virtual space is rendered on the screen so that the plurality of images are presented at the virtual distance.

## Patentansprüche

1. Verfahren zum Betreiben eines Bildschirms eines Head Mounted Display ,HMD` (104, 1417), umfassend:
Ausführen (410) eines Programms, wobei durch die Ausführung Bilder, die durch das Programm generiert werden, auf dem Bildschirm des HMD gerendert werden, wobei der Bildschirm konfiguriert ist, um die Bilder unter Nutzung einer digital erzeugten Modellierung zu rendern, wodurch eine optische Einstellung, die eine Größe und einen Abstand, in dem das Bild gerendert wird, definiert, für den Bildschirm geändert wird;
Präsentieren (420) eines ersten Bilds auf dem Bildschirm unter Nutzung einer ersten optischen Einstellung für den Bildschirm, wobei das erste Bild eine erste Größe aufweist und in einem Abstand gerendert wird;
Empfangen (430) einer ersten Eingabe, die einen Schärfegrad für das erste Bild identifiziert;
Präsentieren (440) eines zweiten Bilds auf dem Bildschirm, wobei das zweite Bild eine zweite Größe aufweist und in dem Abstand gerendert wird;
Empfangen (450) einer zweiten Eingabe, die einen Schärfegrad für das zweite Bild identifiziert;
Ändern (460) der ersten optischen Einstellung für den Bildschirm des HMD in eine zweite optische Einstellung für den Bildschirm basierend auf der ersten und der zweiten Eingabe, die den Schärfegrad des ersten bzw. des zweiten Bilds identifizieren; und
Speichern der zweiten optischen Einstellung in einem dem Benutzer zugeordneten Benutzerprofil, wobei die zweite optische Einstellung so konfiguriert ist, dass sie sich bei der Identifizierung des Benutzers automatisch aus dem Benutzerprofil des Benutzers für den Bildschirm des HMD einstellen lässt,
wobei das erste Bild und das zweite Bild in einem dreidimensionalen virtuellen Raum gerendert werden,
wobei das erste Bild und das zweite Bild in dem Abstand präsentiert werden, wobei der Abstand ein virtueller Abstand in dem dreidimensionalen virtuellen Raum ist, wobei der dreidimensionale virtuelle Raum so auf dem Bildschirm gerendert wird, dass das erste Bild und das zweite Bild in dem virtuellen Abstand präsentiert werden.

2. Verfahren nach Anspruch 1, ferner umfassend:
Identifizieren eines dem HMD zugeordneten zweiten Benutzers;
Zugreifen auf ein zweites Benutzerprofil für den zweiten Benutzer; und
automatisches Ändern einer aktuellen optischen Einstellung für den Bildschirm des HMD in eine neue, aus dem zweiten Benutzerprofil identifizierte optische Einstellung.

3. Verfahren nach Anspruch 1, wobei das Benutzerprofil Daten zur biometrischen Identität zum Identifizieren des Benutzers enthält und die biometrische Identität unter Nutzung eines Netzhautscans oder Irisscans über eine interne Kamera des HMD verifiziert wird.

4. Verfahren nach Anspruch 1, ferner umfassend:
Anpassen der zweiten optischen Einstellung für den Bildschirm des HMD als Reaktion auf Änderungen der von dem Benutzer erhaltenen Schärfegradrückmeldung; und
Aktualisieren der in dem Benutzerprofil des Benutzers gespeicherten zweiten optischen Einstellung, um die Anpassung widerzuspiegeln.

5. System zum Betreiben eines Bildschirms eines Head Mounted Display ,HMD` (104, 1417), umfassend:
Einrichtungen (1302, 268) zum Ausführen eines Programms, wobei durch die Ausführung Bilder, die durch das Programm generiert werden, auf dem Bildschirm des HMD gerendert werden, wobei der Bildschirm konfiguriert ist, um die Bilder unter Nutzung einer digital erzeugten Modellierung zu rendern, wodurch eine optische Einstellung, die eine Größe und einen Abstand, in dem das Bild gerendert wird, definiert, für den Bildschirm geändert wird;
Einrichtungen (1302, 1306, 104, 1417) zum Präsentieren mehrerer Bilder auf dem Bildschirm, damit die mehreren Bilder in einem virtuellen Abstand in einem dreidimensionalen virtuellen Raum präsentiert werden, wobei jedes der mehreren Bilder eine andere Größe aufweist;
Einrichtungen (258, 289) zum Empfangen einer Schärfegradrückmeldung von dem Benutzer für jedes der mehreren Bilder;
Einrichtung (268) zum automatischen Anpassen der optischen Einstellung für den Bildschirm des HMD, damit die angepasste optische Einstellung optische Eigenschaften des Sehvermögens des Benutzers kompensiert; und
Einrichtungen (1314, 256) zum Speichern der angepassten optischen Einstellung in einem dem Benutzer zugeordneten Benutzerprofil, wobei die gespeicherte, angepasste optische Einstellung so konfiguriert ist, dass sie sich bei der Identifizierung des Benutzers automatisch aus dem Benutzerprofil des Benutzers für den Bildschirm des HMD einstellen lässt,
wobei die mehreren Bilder in einem dreidimensionalen virtuellen Raum gerendert werden, wobei die mehreren Bilder in dem Abstand präsentiert werden, wobei der Abstand ein virtueller Abstand in dem dreidimensionalen virtuellen Raum ist, wobei der dreidimensionale virtuelle Raum so auf dem Bildschirm gerendert wird, dass die mehreren Bilder in dem virtuellen Abstand präsentiert werden.

## Revendications

1. Procédé pour faire fonctionner un écran d'un visiocasque 'HMD' (104, 1417), comprenant :
l'exécution (410) d'un programme, l'exécution effectuant le rendu d'images générées par le programme sur l'écran du HMD, l'écran étant configuré pour effectuer le rendu des images en utilisant une modélisation créée numériquement, qui modifie un réglage optique qui définit une dimension et une distance selon lesquelles l'image fait l'objet d'un rendu, pour l'écran ;
la présentation (420) d'une première image sur l'écran en utilisant un premier réglage optique pour l'écran, la première image présentant une première dimension et faisant l'objet d'un rendu à une distance ;
la réception (430) d'une première entrée qui identifie un niveau de clarté pour la première image ;
la présentation (440) d'une seconde image sur l'écran, la seconde image présentant une seconde dimension et faisant l'objet d'un rendu à la distance ;
la réception (450) d'une seconde entrée qui identifie un niveau de clarté pour la seconde image ;
la modification (460) du premier réglage optique pour l'écran du HMD selon un second réglage optique pour l'écran, sur la base des première et seconde entrées qui identifient le niveau de clarté des première et seconde images ; et
le stockage du second réglage optique pour un profil d'utilisateur associé à l'utilisateur, le second réglage optique est configuré pour être défini automatiquement pour l'écran du HMD à partir du profil d'utilisateur de l'utilisateur suite à l'identification de l'utilisateur,
dans lequel la première image et la seconde image font l'objet d'un rendu dans un espace virtuel tridimensionnel, la première image et la seconde image étant présentées à la distance, dans lequel la distance est une distance virtuelle dans l'espace virtuel tridimensionnel, dans lequel l'espace virtuel tridimensionnel fait l'objet d'un rendu sur l'écran de telle sorte que la première image et la seconde image soient présentées à la distance virtuelle.

2. Procédé selon la revendication 1, comprenant en outre :
l'identification d'un second utilisateur qui est associé au HMD ;
l'accès à un second profil d'utilisateur pour le second utilisateur ; et
la modification automatique d'un réglage optique courant pour l'écran du HMD selon un nouveau réglage optique identifié à partir du second profil d'utilisateur.

3. Procédé selon la revendication 1, dans lequel le profil d'utilisateur inclut des données concernant l'identité biométrique pour identifier l'utilisateur, l'identité biométrique est vérifiée en utilisant un balayage parmi un balayage de la rétine et un balayage de l'iris via une caméra interne du HMD.

4. Procédé selon la revendication 1, comprenant en outre :
l'ajustement du second réglage optique pour l'écran du HMD en réponse à des modifications du niveau de clarté obtenues en retour depuis l'utilisateur ; et
la mise à jour du second réglage optique stocké dans le profil d'utilisateur de l'utilisateur pour qu'il reflète l'ajustement.

5. Système pour faire fonctionner un écran d'un visiocasque 'HMD' (104, 1417), comprenant :
un moyen (1302, 268) pour exécuter un programme, l'exécution effectuant le rendu d'images générées par le programme sur l'écran du HMD, l'écran étant configuré pour effectuer le rendu des images en utilisant une modélisation créée numériquement, qui modifie un réglage optique qui définit une dimension et une distance selon lesquelles l'image fait l'objet d'un rendu, pour l'écran ;
un moyen (1302, 1306, 104, 1417) pour présenter une pluralité d'images sur l'écran, de telle sorte que les images de la pluralité d'images soient présentées à une distance virtuelle dans un espace virtuel tridimensionnel, chacune de la pluralité d'images présentant une dimension distincte ;
un moyen (258, 289) pour recevoir un niveau de clarté en retour depuis l'utilisateur pour chacune de la pluralité d'images ;
un moyen (268) pour ajuster automatiquement le réglage optique pour l'écran du HMD, de telle sorte que le réglage optique ajusté compense des caractéristiques optiques de la vision de l'utilisateur ; et
un moyen (1314, 256) pour stocker le réglage optique ajusté pour un profil d'utilisateur associé à l'utilisateur, le réglage optique ajusté stocké est configuré pour être défini automatiquement pour l'écran du HMD à partir du profil d'utilisateur de l'utilisateur suite à l'identification de l'utilisateur,
dans lequel les images de la pluralité d'images font l'objet d'un rendu dans un espace virtuel tridimensionnel, les images de la pluralité d'images étant présentées à la distance, dans lequel la distance est une distance virtuelle dans l'espace virtuel tridimensionnel, dans lequel l'espace virtuel tridimensionnel fait l'objet d'un rendu sur l'écran de telle sorte que les images de la pluralité d'images soient présentées à la distance virtuelle.
